# FASCICULE DE BREVET EUROPEEN

(11) **EP 0 726 356 B1**
(45) Date de publication et mention de la délivrance du brevet: **03.04.2002**
(21) Numéro de dépôt: 96400261.2
(22) Date de dépôt: 07.02.1996
(51) Int. Cl.: D21H 11/18, D21C 5/00

(54) **Cellulose microfibrillée et son procédé d'obtention à partir de pulpe de végétaux à parois primaires, notamment à partir de pulpe de betteraves sucrières**
Mikrofibrillierte Cellulose und Verfahren zu ihrer Herstellung aus pflanzlichen Pulpen mit Primärwand, insbesondere aus Zuckerrübenpulpe
Microfibrillated cellulose and process for making the same from vegetable pulps having primary walls, especially from sugar beet pulp

(30) Priorité: 08.02.1995 FR 9501460; 02.10.1995 FR 9511555
(43) Date de publication de la demande: 14.08.1996
(73) Titulaire: Saint-Louis Sucre S.A., 75008 Paris (FR)
(72) Inventeur: Dinand, Elisabeth, F-38000 Grenoble (FR); Maureaux, Alain, F-27930 Guichainville (FR); Chanzy, Henri, F-38700 La Tronche (FR); Vincent, Isabelle, F-27000 Evreux (FR); Vignon, Michel R., F-38240 Meylan (FR)
(74) Mandataire: Goulard, Sophie

(56) Documents cités:
- EP-A- 0 102 829
- EP-A- 0 415 193
- WO-A-84/03286
- GB-A- 2 066 145
- US-A- 4 649 113

## Description

La présente invention concerne une nouvelle cellulose de parenchyme et son procédé d'obtention. Plus particulièrement la présente invention concerne une nouvelle cellulose microfibrillée et son procédé d'obtention à partir de pulpe de végétaux à parois primaires, notamment à partir de pulpe de betteraves sucrières après extraction du saccharose.

La cellulose est un produit de grande importance industrielle qui trouve de nombreuses applications. On peut citer parmi celles-ci:
- les applications alimentaires, comme épaississant, pour la stabilisation de dispersions, d'émulsions et de suspensions, pour des denrées à faible pouvoir calorique, pour des denrées à faible proportion de graisse ou de cholestérol, etc.;
- les applications industrielles, dans les peintures, le papier, le textile, l'agriculture, les cosmétiques, etc.;
- les applications pharmaceutiques, comme excipient de médicament, agent de contrôle du relargage, support de pommades ou de crèmes, agent de transit intestinal, etc.

Les celluloses connues jusqu'à présent présentent toutes des inconvénients.

Le WO-A-93/11182 de Weyerhaeuser décrit une cellulose bactérienne ayant une structure réticulée. Outre le fait qu'elle est très onéreuse, une telle cellulose bactérienne peut occasionner des problèmes de contamination dans des applications alimentaires.

Le FR-A-2 472 628 de ITT INDUSTRIES décrit une cellulose microfibrillée, constituée essentiellement de parois secondaires, obtenue à partir de pâte de bois. Une telle cellulose ne peut être remise facilement en suspension une fois déshydratée. Ceci occasionne d'importants problèmes de stockage et de transport en raison du fait que les suspensions ont une teneur maximale en cellulose d'environ 4 %.

Essayant de pallier cet inconvénient, l'EP-A-120 471 de ITT INDUSTRIES décrit une cellulose microfibrillée à parois secondaires (car obtenue à partir de pâte de bois), redispersable, séchée , caractérisée par la présence d'un additif empêchant la formation de liaisons hydrogène entre les fibrilles de cellulose. La quantité d'additif est considérable puisqu'elle représente au moins 50 % en poids par rapport à la cellulose et de préférence au moins la même quantité que celle-ci. L'additif est par exemple un composé polyhydroxylé tel un sucre comportant de 5 à 6 atomes de carbone ou un glycol, un borate ou un phosphate alcalin, un solvant aprotique, un amine ou un composé d'ammonium quaternaire. Outre le fait que l'appellation de "cellulose" est impropre pour désigner un produit qui n'est constitué de cellulose que pour au plus la moitié, une telle "cellulose" est d'un coût élevé et ne convient pas pour toutes les applications. De plus, sans ajout d'additif cette cellulose ne récupère, après séchage, que 2 à 20 % au maximum de sa viscosité initiale. Le maintien de la valeur de la viscosité exige la présence d'un additif en quantité pondérale sensiblement égale à celle de la cellulose.

L'EP-A-0 102 829 de Weibel décrit un procédé pour isoler simultanément les constituants cellulosiques et hémicellulosiques de la pulpe de betterave sucrière. Mais, de même que pour le FR-A-2 472 628 précité, la cellulose de parenchyme obtenue ne peut, une fois déshydratée, être remise facilement en suspension, occasionnant les mêmes problèmes de stockage et de transport.

Par ailleurs, la valorisation de résidus végétaux, notamment de la pulpe de betterave sucrière est une nécessité industrielle importante.

Un objet de la présente invention est de fournir une cellulose microfibrillée pouvant être remise en suspension après avoir été déshydratée sans ajout d'un additif.

Un objet de l'invention est encore de fournir une cellulose microfibrillée qui récupère, après séchage, la quasi totalité de sa viscosité initiale et ceci sans ajout d'additif.

Un autre objet de la présente invention est de fournir un procédé d'obtention de cellulose issu de la valorisation résidus végétaux à parois primaires, notamment de la pulpe de betterave sucrière.

La présente invention répond à ces trois objets.

D'autres objets et avantages de l'invention apparaîtront à la lecture de la description ci-après.

D'une manière générale, la cellulose native se présente toujours sous une forme microfibrillaire, ces microfibrilles étant plus ou moins associées dans des fibres, des parois et des membranes. Chaque microfibrille cellulosique est constituée d'un assemblage rigoureux de chaînes de cellulose parallèles, cet assemblage résultant du mode de biosynthèse de la cellulose. On considère généralement que les microfibrilles de cellulose ne comportent que peu de défauts le long de leur axe. Leurs propriétés mécaniques avoisinent les propriétés mécaniques théoriques de la cellulose : ténacité de l'ordre de 130 GPa et contrainte de rupture de l'ordre de 13 GPa. Les microfibrilles cellulosiques se présentent donc comme un matériau intéressant si l'on arrive à les dissocier et à les remettre en forme.

Les microfibrilles de cellulose sont habituellement fortement associées entre elles dans les parois ou les fibres. On distingue les parois secondaires dans lesquelles les microfibrilles sont organisées sous forme de nappes très orientées formant ainsi une fibre indissociable et les parois primaires dans lesquelles les microfibrilles sont déposées de façon désorganisée. Le parenchyme est un exemple typique de tissus à paroi primaire. Alors qu'il est très difficile, voire impossible, de séparer sans les abîmer les microfibrilles de cellulose de parois secondaires, il est aisé de dissocier les microfibrilles de parois primaires, en raison non seulement de leur organisation plus lâche mais encore de ce que les polysaccharides intersticiels, souvent chargés, constituent un pourcentage important de ces parois.

Des exemples de parenchyme sont constitués par la pulpe de betterave sucrière, les citrus (citrons, oranges, pamplemousses) et la plupart des fruits et légumes. Un exemple de végétal à parois secondaires est le bois.

Par une opération mécanique de cisaillement, il est possible de démêler les microfibrilles de parois primaires alors que cette même opération cassera les fibres de parois secondaires pour obtenir des microfibrilles. En d'autres termes, à partir de parois secondaires il n'est possible d'obtenir des microfibrilles qu'en cassant les fibres originelles.

La cellulose de paroi primaire se présente donc comme un matériau à potentiel intéressant

La présente invention sera illustrée en référence à la pulpe de betterave.

Les pulpes de betteraves sont constituées principalement de parenchyme donc de cellules à parois primaires.

La composition pondérale de la pulpe de betterave sucrière à l'état solide peut varier selon l'origine des pulpes et les conditions de culture. Les pulpes renferment en général :
- 15 à 30 % de cellulose,
- 12 à 30 % de pectines,
- 12 à 30 % d'hémicelluloses,
- 2 à 6 % de protéines,
- 2 à 6 % de matières minérales,
- 2 à 6 % de lignine, de tannins, de polyphénols et d'ester ferrulique.

Il a été déjà proposé de traiter de la pulpe de betterave sucrière pour isoler de la cellulose de cellules parenchymateuses. L'EP-A-0 102 829 précité concerne un tel procédé et décrit de :
- mettre en suspension de la pulpe de betterave dans un milieu aqueux acide (pH<4,5) ou basique (pH>10,0);
- chauffer la suspension à une température supérieure à 125°C (0,5 MPa);
- maintenir la suspension à une température supérieure à 125°C, pendant une période se situant entre 15 et 360 s;
- de soumettre la suspension chauffée à un cisaillement mécanique dans un réacteur tubulaire, suivi d'une détente rapide à travers des orifices de petites tailles dans une zone à pression atmosphérique;
- de filtrer la suspension et de récupérer d'une part la fraction insoluble qui contient la cellulose de parenchyme, d'autre part la fraction soluble (le filtrat) qui contient les hémicelluloses;
- de traiter la fraction cellulosique par blanchiment à l'hypochlorite de sodium et défibrillation mécanique pour donner une pâte de cellulose de parenchyme constituée de fragments de parois cellulaires.

Ainsi que cela a été mentionné plus haut la cellulose obtenue selon le procédé de l'EP-A-0 102 829 ne peut, une fois déshydratée, être remise facilement en suspension.

La présente invention fournit un procédé d'obtention de cellulose microfibrillée à partir de pulpe de parenchyme principalement à parois primaires, notamment de pulpe de betterave sucrière après extraction du saccharose, contenant de la cellulose, des pectines, des hémicelluloses, des protéines et des matières minérales, comprenant les étapes de :
Procédé de préparation de la cellulose microfibrillée de la revendication 1, à partir de pulpe de parenchyme principalement à parois primaires, notamment de pulpe de betterave sucrière après extraction du saccharose, contenant de la cellulose, des pectines, des hémicelluloses, des protéines et des matières minérales, comprenant les étapes de :
   (a) hydrolyse acide ou basique de la pulpe pour effectuer une extraction partielle des pectines et des hémicelluloses à une température composée entre environ 60° C et environ 100° C ;
   (b) récupération du résidu solide de la suspension provenant de l'étape (a);
   (c) deuxième extraction, effectuée dans des conditions alcalines, du résidu de matériau cellulosique provenant de l'étape (b), obligatoirement si l'étape (a) est acide, facultativement si l'étape (a) est basique ;
   (d) le cas échéant, récupération du résidu de matériau cellulosique par séparation de la suspension provenant de l'étape (c) ;
   (e) lavage du résidu provenant de l'étape (b) ou, le cas échéant, de l'étape (d) ;
   (f) facultativement, blanchiment du matériau cellulosique provenant de l'étape (e) ;
   (g) récupération du matériau cellulosique par séparation de la suspension provenant de l'étape (f) ;
   (h) dilution dans l'eau du matériau cellulosique provenant de l'étape (g) pour obtenir entre 2 et 10% de matière sèche ;
   (i) homogénéisation de la suspension de cellules provenant de l'étape (h) par mixage ou broyage ou toute opération de cisaillement mécanique élevé, suivi de passage de la suspension de cellules à travers un orifice de petit diamètre, soumettant la suspension à une chute de pression d'au moins 20 Mpa et à une action de cisaillement à vitesse élevée suivie d'un impact de décélération à vitesse élevée, procédé dans lequel toute étape d'extraction alcaline est effectuée avec une base dont la concentration est inférieure à environ 9% en poids.

Dans l'étape (a), on entend par "pulpe" de la pulpe humide, déshydratée, conservée par ensilage ou partiellement dépectinée.

L'étape d'extraction (a) peut être effectuée en milieu acide ou en milieu basique.

Pour une extraction acide, la pulpe est mise en suspensions dans une solution d'eau pendant quelques minutes de façon à homogénéiser la suspension acidifiée à un pH compris entre 1 et 3, de préférence entre 1,5 et 2,5, avec une solution concentrée d'un acide tel que l'acide chlorhydrique ou l'acide sulfurique.

Pour une extraction basique la pulpe est ajoutée à une solution alcaline d'une base, par exemple de la soude ou de la potasse, de concentration inférieure à 9 % en poids, de préférence inférieure à 6 % en poids, mieux encore entre 1 et 2 % en poids. On pourra ajouter une faible quantité d'un agent antioxydant soluble dans l'eau, tel que le sulfite de sodium Na₂SO₃, afin de limiter les réactions d'oxydation de la cellulose.

Selon l'invention, l'étape (a) est effectuée à une température "modérée", comprise entre environ 60°C et 100°C, de préférence comprise entre environ 70°C et 95°C, mieux encore, égale à environ 90°C. Ceci contraste avec les températures très élevées (>125°C) utilisées dans l'art antérieur. La durée de l'étape (a) est comprise entre environ 1 heure et environ 4 heures. Lors de l'étape (a) selon l'invention, il se produit une hydrolyse partielle avec libération et solubilisation des pectines et des hémicelluloses tout en préservant la masse moléculaire de la cellulose.

Dans l'étape (b), le résidu solide est récupéré à partir de la suspension provenant de l'étape (a).

Dans le cas où la première extraction (a) est une hydrolyse acide, il faut obligatoirement procéder à la deuxième étape d'extraction (c) qui est, elle, effectuée dans des conditions basiques. Dans le cas où la première extraction (a) est une hydrolyse basique, la deuxième étape d'extraction (c) est facultative.

Donc, si nécessaire, le résidu de matériau cellulosique provenant de l'étape (b) subit, dans l'étape (c) une deuxième extraction. Celle-ci est une extraction alcaline.

Selon la présente invention, il y a par conséquent toujours au moins une extraction alcaline dans le procédé.

Selon la présente invention, toute extraction alcaline - à savoir l'extraction alcaline de l'éventuelle étape (c) et/ou l'extraction de l'étape (a), si elle est basique - doit être effectuée avec une base, ladite base étant choisie de préférence parmi la soude et la potasse, dont la concentration est inférieure à environ 9 % en poids, de préférence comprise entre environ 1 % et environ 6 % en poids.

La demanderesse a constaté qu'en effectuant chaque étape d'extraction alcaline selon les dispositions de l'invention on évite la transformation irréversible:
cellulose I → cellulose II

Une telle transformation détruirait la structure microfibrillaire qui est nécessaire pour obtenir les propriétés spécifiques au produit de l'invention.

La durée de toute étape d'extraction alcaline est comprise entre environ 1 et environ 4 heures, elle est de préférence égale à environ 2 heures.

Dans l'étape (d) le résidu solide est récupéré à partir de l'éventuelle étape (c).

Dans l'étape (e) le résidu provenant de l'étape (b) ou (d) est lavé abondamment à l'eau afin de récupérer le résidu de matériau cellulosique.

Selon l'invention, on garde un certain pourcentage de polysaccharides acides non cellulosiques (pectines, hémicelluloses) à la surface des microfibrilles de cellulose, ce qui a pour effet notamment de les empêcher de s'associer entre elles. Ce pourcentage de polysaccharides acides sera en général inférieur à environ 30 % en poids, de préférence inférieur à 5 % en poids. Une quantité de polysaccharides acides trop importante nécessiterait des durées d'homogénéisation trop longues, toutefois, selon l'invention, ce pourcentage ne doit pas atteindre 0.

Le matériau cellulosique de l'étape (e) est ensuite facultativement blanchi, dans l'étape (f), par exemple au chlorite de sodium, à l'hypochlorite de sodium, au peroxyde d'hydrogène à raison de 5-20 % sur matière sèche, etc., d'une manière connue en soi. Différentes concentrations peuvent être utilisées, à des températures comprises entre environ 18°C et 80°C, de préférence entre environ 50°C et 70°C. La durée de l'étape (f) est comprise entre environ 1 heure et environ 4 heures, de préférence entre environ 1 et environ 2 heures. On obtient alors un matériau cellulosique contenant entre 85 et 95 % en poids de cellulose.

La suspension provenant de l'étape (e), éventuellement blanchie dans l'étape (f), est, dans rétape (h), rediluée dans de l'eau à raison de 2 à 10 % de matière sèche, puis elle est envoyée à l'étape (i) qui est effectuée, selon l'invention, par mixage ou broyage ou par toute opération de cisaillement mécanique élevé, suivi de passage de la suspension de cellules à travers un orifice de petit diamètre, soumettant la suspension à une chute de pression d'au moins 20 MPa et à une action de cisaillement à vitesse élevée suivie d'un impact de décélération à vitesse élevée.

Le mixage ou broyage est, par exemple, effectué par passage au mixeur ou broyeur pendant une durée allant de quelques minutes à environ une heure, dans un appareil de type tel un WARING BLENDOR équipé d'une hélice à quatre pales ou broyeur à meule ou tout autre type de broyeur, tel un broyeur colloïdal, dans les conditions suivantes : la concentration en cellulose matière sèche est comprise entre 2 et 10 % en poids. Au cours du mixage ou broyage se produit un échauffement de la suspension. Le récipient est équipé de préférence d'un système de nervures déflectrices par lequel le liquide est renvoyé vers les pales de l'hélice situées au centre du récipient

L'homogénéisation proprement dite sera avantageusement effectuée dans un homogénéisateur du type MANTON GAULIN dans lequel la suspension est soumise à une action de cisaillement à vitesse et à pression élevées dans un passage étroit et contre un anneau de choc. Les conditions d'homogénéisation sont les suivantes : la concentration en pulpes sèches de la suspension à homogénéiser est, après mixage ou broyage, comprise entre 2 et 10 % en poids. La suspension est introduite dans l'homogénéiseur de préférence après préchauffage à une température comprise entre 40 et 120°C, de préférence comprise entre 85 et 95°C. La température de l'opération d'homogénéisation est maintenue entre 95 et 120°C, de préférence supérieure à 100°C. La suspension est soumise dans l'homogénéisateur à des pressions comprises entre 20 et 100 MPa, et de préférence supérieures à 50 MPa.

L'homogénéisation de la suspension cellulosique est obtenue par un nombre de passages pouvant varier entre 1 et 20, de préférence entre 2 et 5, jusqu'à obtention d'une suspension stable.

Il faut noter que l'homogénéisation selon la présente invention a une fonction différente de celle des brevets ITT INDUSTRIES précités FR-A-2 472 628 et EP-A-120 471. En effet, dans le procédé de la présente invention l'étape d'homogénéisation a pour fonction de démêler sans les casser les microfibrilles, alors que dans les brevets ITT INDUSTRIES susmentionnés cette même étape a pour fonction de casser les fibres des parois secondaires pour obtenir des microfibrilles.

L'opération d'homogénéisation de l'étape (i) sera avantageusement suivie d'une opération de cisaillement mécanique élevé, par exemple dans un appareil tel l'ULTRA TURRAX de SYLVERSON.

La demanderesse a constaté que le traitement est d'autant plus efficace que la concentration en matière sèche de la suspension à homogénéiser est plus élevée et que la température d'homogénéisation est plus élevée. C'est-à-dire que lorsque la concentration en cellulose augmente, le nombre de passages nécessaires diminue. Cependant, on sera limité par la viscosité de la suspension en cours de traitement qui dépend directement de la concentration de la suspension traitée. En effet, l'appareil n'est pas, de par sa conception, adapté pour travailler avec des suspensions trop visqueuses.

La demanderesse a constaté qu'il existe des clapets spéciaux pour broyage cellulaire qui permettent de diminuer le nombre de passages nécessaires. Par ailleurs, le nombre de passages sera réduit si l'on ajoute à la suspension à homogénéiser des agents dispersants, suspensoïdes ou épaississants solubles dans l'eau tels que la carboxyméthylcellulose, des éthers cellulosiques, des polysaccharides gélifiants (guar, caroube, alginates, carraghénannes, xanthane et leurs dérivés).

Par ailleurs, les pulpes de betteraves renferment de 4 à 6 % de composés minéraux insolubles dans l'eau.

Parmi les composés minéraux présents dans les pulpes de betterave, on trouve des résidus du sol, des cailloux de taille relativement importante (>1 mm). Parmi ces composés minéraux insolubles, la demanderesse a mis en évidence la présence de cristaux de silice et d'oxalate de calcium monohydrate. Ce dernier se trouve à l'intérieur de cellules qui sont localisées en général dans les faisceaux libéro-ligneux, à proximité des vaisseaux. Ces cristaux d'oxalate de calcium sont contenus dans certaines cellules et correspondent à une forme de stockage du calcium par la plante. La nature, les quantités et les proportions de ces minéraux peuvent varier avec le sol de culture de la plante, la variété de betterave, le climat pendant la croissance, etc.

La présence de tels cristaux d'oxalate de calcium pose un problème lors de rétape d'homogénéisation car ils sont très abrasifs et il est préférable de les éliminer ou tout du moins de réduire fortement leur teneur. Une telle élimination peut être effectuée par un traitement en milieu acide, par exemple l'acide chlorhydrique, tel un traitement d'extraction acide tel celui qui peut être effectué dans l'étape (a) (si naturellement celle-ci est effectuée dans des conditions acides), qui permet de transformer l'oxalate de calcium monohydrate en acide oxalique et en chlorure de calcium solubles dans l'eau.

L'élimination de l'oxalate de calcium peut également être effectuée par un broyage mécanique et un tamisage. La demanderesse a ainsi constaté que la concentration en résidus minéraux pouvait être diminuée en procédant, avant l'étape (a), à un broyage et un tamisage de la pulpe déshydratée pour ne conserver que la fraction ayant une granulométrie comprise entre environ 20 µm et 1000 µm, de préférence entre 75 µm et environ 600 µm.

Dans le cas où le résidu cellulosique contiendrait, après extraction basique ou après blanchiment, une quantité non négligeable de cristaux d'oxalate calcium libres ou à l'intérieur des cellules, on peut procéder à un broyage humide modéré, par exemple dans un mixeur de type WARING BLENDOR ou tout autre broyeur, ce qui permet de faire éclater les cellules, suivi d'une filtration ou d'un tamisage sur tamis approprié. L'ouverture du tamis sera aisément déterminée par l'homme de l'art, par exemple entre 20 et 75 µm, telle une ouverture de 75, 60, 40 ou 20 µm, selon l'importance du mixage ou broyage, c'est-à-dire selon la taille des fragments de cellules obtenus, et la faisabilité industrielle.

Un autre moyen pour éliminer l'oxalate de calcium gênant est de procéder à un traitement d'oxydation, par exemple avec de l'ozone ou du peroxyde d'hydrogène, associé à un traitement de blanchiment dans l'étape (f).

Afin d'éliminer les cristaux d'oxalate de calcium, on peut également effectuer un blanchiment dans l'étape (f) avec de l'ozone ou du peroxyde d'hydrogène.

Tous ces moyens d'élimination des cristaux d'oxalate de calcium, ou tout du moins de réduction de la teneur en de tels cristaux, peuvent être combinés entre eux ou utilisés isolément, comme cela sera aisément déterminé par l'homme de l'art dans chaque cas particulier.

La cellulose microfibrillée obtenue par le procédé de la présente invention est constituée de type I.

C'est une cellulose microfibrillée de type I provenant de parenchyme, comprenant des restes de polysaccharides acides non cellulosiques en provenance du parenchyme.

Selon la présente invention, les polysaccharides acides non cellulosiques peuvent être des hemicelluloses.

De préférence, le pourcentage en poids des restes de polysaccharides acides non cellulosiques est inférieur à 30%, mieux encore inférieur à 5%.

La cellulose microfibrillée de la présente invention est remarquable en ce qu'elle est capable, après déshydratation, d'être remise en suspension.

La cellulose microfibrillée de l'invention possède une cristallinité de 15 à 50 %.

Elle est constituée de microfibrilles ayant une section comprise entre environ 2 et environ 4 nm.

La cellulose microfibrillée de la présente invention forme des suspensions stables, de type cristaux liquides, constituée de domaines nématiques.

La cellulose microfibrillée de la présente invention présente un groupe de propriétés intéressantes :
- propriétés rhéologiques uniques qui permettent d'obtenir des suspensions stables à des pH dans l'intervalle de 2 à 12 et dans une gamme de température de 0 à 100°C à une concentration de 0,2 % minimum et ayant l'aspect d'un gel à des concentrations supérieures à 1 %.

La cellulose de la présente invention a, à 1 % de MS (matières sèches) dans l'eau, un comportement de gel faible. On remarque en effet, lors de l'étude du comportement viscoélastique du produit en oscillation, que G' et G" sont stables dans le domaine de fréquence et que G' = 5G", G' étant la composante élastique du système et G" étant la composante visqueuse. Il faut souligner que le xanthane, par exemple, n'a pas ce comportement de gel. La viscosité de la cellulose de la présente invention à 20°C est bien supérieure à celle du xanthane à 20°C et équivalente à celle du xanthane à 80-90°C.

En ce qui concerne la viscosité, à un taux de 2 % dans l'eau, la cellulose de la présente invention a un gradient de cisaillement de 1,8 s⁻¹, à une viscosité équivalente à la CMC haute viscosité à une concentration identique (≈ 20 000 mPa.s). La cellulose de la présente invention a une viscosité bien supérieure au xanthane (≈ 7000 mPa.s). Un mélange de 1,8 % de cellulose de la présente invention et de 0,2 % de CMC dans l'eau a des propriétés rhéologiques intéressantes car la solution atteint des viscosités supérieures à 25 000 mPa.s.

La cellulose de la présente invention est un produit rhéofluidifiant et thixotrope.
- propriétés physiques et chimiques uniques en ce que la cellulose est constituée majoritairement de cellulose à laquelle est associé un taux de pectines ou d'hémicelluloses résiduelles qui entraînent des propriétés physiques et chimiques particulières. La cellulose selon l'invention est constituée de microfibrilles plus ou moins individualisées, qui sont du type native ou cellulose I.
- très grande réactivité chimique, très grande surface accessible;
- excellent pouvoir de rétention d'eau;
- pouvoir suspensif élevé;
- pouvoir épaississant.

La cellulose de l'invention peut, une fois obtenue par le procédé ci-dessus, être concentrée, de préférence à un taux d'environ 50 % de matières sèches, par précipitation, par exemple dans un alcool, tel l'éthanol, l'isopropanol ou tout autre alcool semblable, par un processus de congélation-décongélation, par opération de pressage du type passage sur un filtre presse (ce qui ne peut être obtenu pour les autres hydrocolloïdes tels que le xanthane, la CMC, etc.), par filtration, par déshydratation, par dialyse contre une solution hygroscopique dont la taille des molécules est supérieure à la taille des pores de la membrane utilisée ou bien par tout autre procédé connu de l'homme de l'art permettant de concentrer de telles suspensions.

La cellulose issue du procédé selon l'invention ou après une étape de concentration peut être séchée de façon plus ou moins poussée par évaporation, déshydratation, séchage basse température en humidité contrôlée, séchage par atomisation, séchage sur cylindres, lyophilisation ou méthode du point critique, ou tout autre procédé permettant d'obtenir le produit à l'état secondaire. Les conditions de séchage basse température en humidité contrôlée sont particulièrement avantageuses en ce sens qu'elles sont douces et peu coûteuses en énergie.

Contrairement au brevet ITT INDUSTRIES EP-A-120 471 où, sans ajout d'additif, la structure microfibrillée ne récupère après séchage qu'au plus de 2 % à 20 % au maximum de sa viscosité initiale (page 4, lignes 38-42), la cellulose de la présente invention récupère sans ajout d'additif la quasi totalité de sa viscosité initiale après séchage.

La cellulose de la présente invention présente en outre des propriétés filmogènes et de renfort intéressantes.

En effet, lorsque l'on applique une suspension de microfibrilles selon l'invention sur une surface, par exemple une surface métallique, en verre, en céramique, etc., et que l'on laisse sécher, les microfibrilles forment un film à la surface.

La cellulose de la présente invention étalée en couche mince, forme un film en se déshydratant. Les propriétés de ce film ont été déterminées par mesure du Module d'Young corrigé (Ecor), ce qui donne la rigidité du système. Par exemple, à 25 % d'humidité, on a Ecor = 2500 à 3000 MPa.

On peut aussi traiter des feuilles de papier humides lors de leur fabrication par une suspension de cellulose selon l'invention, améliorant ainsi leurs propriétés physiques, notamment leur résistance à la traction.

Dans le domaine non alimentaire, on peut encore citer de nombreuses applications potentielles de la cellulose de la présente invention :
- pour les peintures, elle constitue un bon épaississant en phase aqueuse, en remplacement, par exemple, des hydroxy-propyl-celluloses;
- ses propriétés filmogènes et de renfort peuvent être utilisées dans les latex destinés aux peintures, à la papeterie, aux revêtements adhésifs, etc.

L'incorporation de 1 à 15 % de cellulose microfibrillée dans du latex (et autres produits hydrosolubles) ou des composés thermoplastiques ou des acétates de cellulose après transformation de surface permet d'améliorer notablement le module d'élasticité et la résistance à la traction.
- agent épaississant pouvant être utilisé dans les boues de forage;

Dans le domaine cosmétique et paramédical, la cellulose microfibrillée de la présente invention constitue un épaississant compétitif par rapport au Carbopol ou autres épaississants utilisés dans ce domaine. Ce produit présente l'avantage d'être moins collant que les autres, ce qui améliore considérablement la rinçabilité des produits et il est de contact plus agréable.

Dans le domaine de la papeterie, on peut citer :
- l'utilisation des propriétés de renfort de la cellulose microfibrillée par introduction dans ta masse de pâte à papier;
- l'utilisation combinée des propriétés épaississantes, de renfort et filmogènes de la cellulose microfibrillée dans le couchage de certains papiers spéciaux. La cellulose offre en outre des propriétés barrières intéressantes.

On peut également déposer la cellulose de l'invention à la surface d'une feuille de papier, ce qui améliore l'opacité et l'uniformité de la surface du papier.

La cellulose de l'invention peut être appliquée seule ou avec d'autres composés tels des pigments et des charges, utilisés habituellement en papeterie.

On utilisera, par exemple, les propriétés de renfort de la cellulose par introduction dans la masse de pâte à papier.

Dans le domaine alimentaire :
- la cellulose microfibrillée a des propriétés de stabilisateur d'émulsion, de support d'arômes, de gélifiant et surtout d'épaississant;
- elle pourra être utilisée en remplacement ou en synergie avec d'autres produits épaississants déjà utilisés dans tout ce secteur tels le xanthane, les CMC, les celluloses microcristallines.

L'utilisation en synergie est particulièrement intéressante au niveau économique. Elle permet en effet, à propriétés égales, d'utiliser beaucoup moins de produits.

Comme exemples d'applications de la cellulose microfibrillée dans le domaine alimentaire, on peut citer les substituts de matières grasses, la stabilisation de mayonnaises, de sauces pour salades, et en général toutes émulsions, les crèmes glacées, les crèmes fouettées, les épaississants pour boissons de tous types, les pâtes à tartiner, les pâtes à frire ou à levées, les desserts lactés, les produits camés, etc.

A effet rhéologique égal, la cellulose de la présente invention est très sensiblement moins chère que le xanthane et que la cellulose bactérienne.

La présente invention sera illustrée plus en détail dans les Exemples non limitatifs suivants en référence aux Figures annexées dans lesquelles :
- la Figure 1 est une photographie prise au microscope optique de cellules de parenchyme individualisées;
- la Figure 2 est une photographie de cellulose native (cellulose I) prise au microscope électronique à transmission;
- la Figure 3 est une photographie de cellulose Il prise au microscope électronique à transmission;
- la Figure 4 est une photographie prise au microscope électronique à transmission de paroi cellulaire avant homogénéisation dans un homogénéisateur Gaulin;
- la Figure 5 est une photographie prise au microscope électronique à transmission de microfibrilles individualisées après homogénéisation dans un homogénéisateur Gaulin (6 passages);
- la Figure 6 est une photographie prise au microscope électronique à transmission de microfibrilles individualisées après homogénéisation dans un homogénéisateur Gaulin (10 passages).

### EXEMPLE 1 : Purification des pulpes de betterave

Les pulpes déshydratées correspondant à des betteraves récoltées dans la région de Nassandres, France, sont remises en suspension dans de l'eau déionisée. Afin d'obtenir une meilleure hydratation, on utilise un mixeur de type WARING BLENDOR équipé d'une hélice à quatre pales, et on mixe de façon intermittente pendant 45 minutes. La suspension est acidifiée par addition d'une solution de H₂SO₄ jusqu'à pH = 2. Cette suspension est maintenue à température ambiante (25°C) pendant 15 minutes puis portée à 80°C pendant 2 heures sous agitation mécanique constante. Cette suspension est ensuite filtrée sur tamis métallique et lavée abondamment à l'eau. Le résidu solide après lavage est extrait par une solution alcaline. Il est remis en suspension dans une solution de soude de concentration appropriée de façon à obtenir une concentration finale de soude de 2 % en poids et un pourcentage de matière sèche de 2,5 % en poids par rapport au liquide total. On y ajoute 0,1 % en poids environ de bisulfite de sodium (Na₂SO₃) par rapport au liquide total. On porte cette suspension à 80°C pendant 2 heures sous agitation mécanique constante. Après ce traitement, on effectue une filtration sur tamis de 0,6 mm. On lave le résidu solide à l'eau jusqu'à obtenir un filtrat neutre.

Après ce lavage, le résidu solide est remis en suspension à 2,5 % dans une solution de chlorite de sodium (NaClO₂) à 3,4 g/l, tamponnée par un mélange de soude et d'acide acétique à un pH = 4,9. Cette suspension est portée à 70°C pendant 3 heures sous agitation mécanique constante. Par la suite, la suspension est filtrée sur tamis en inox puis rincée à l'eau, jusqu'à l'obtention d'un filtrat incolore. Un résidu cellulosique gris clair, de 3 à 5 % en poids sec peut être obtenu par filtration sous pression réduite à raide d'un entonnoir de büchner.

La composition en sucres neutres du résidu solide est obtenue par une analyse chimique basée sur la caractérisation en chromatographie en phase gazeuse des acétates d'alditols obtenus après hydrolyse acide des polysaccharides, réduction et acétylation des sucres monomères. L'identification des acétates d'alditols est réalisée en CPG et le dosage des sucres est effectué en utilisant le myo-inositol comme étalon interne, en tenant compte des facteurs de réponse spécifiques à chacun des alditols. Le chromatographe utilisé est un HEWLETT-PACKARD 5890 avec un détecteur à ionisation de flamme, relié à un intégrateur HEWLETT-PACKARD 3395. On utilise une colonne SP 2380 (0,53 mm x 25 m), et l'azote U comme gaz vecteur.

Les acétates d'alditols sont élués avec des temps de rétention caractéristiques de la colonne. Des études ont été faites pour connaître le facteur de réponse relatif à chaque acétate d'alditol. Connaissant l'aire et la quantité d'inositol de départ, on peut d'après la surface des pics de chacun des acétates d'alditols, en déduire la quantité des oses correspondants, et calculer les pourcentages en poids de chaque sucre neutre monomère obtenu par rapport à la masse totale de sucres neutres de l'échantillon étudié. Le glucose provient presque entièrement de l'hydrolyse de la cellulose ; le pourcentage de glucose donne ainsi une indication sur la pureté de la cellulose de l'échantillon. Les autres sucres neutres sont principalement le xylose, le galactose, le mannose, l'arabinose et le rhamnose, ils donnent une estimation sur les quantités de pectines et d'hémicelluloses résiduelles.

Le dosage chimique du résidu cellulosique obtenu indique un pourcentage de 85 % de glucose.

### EXEMPLE 2 : Purification des pulpes de betterave

Toute la série de traitements de l'Exemple 1 a été répétée en ajoutant après le traitement par le chlorite de sodium et les rinçages correspondants, un second traitement au chlorite de sodium identique au premier. On obtient ainsi un résidu cellulosique blanchâtre dont la composition chimique en sucre neutre a peu varié au cours du deuxième blanchiment. Le dosage chimique indique un pourcentage de 86 % de glucose du résidu cellulosique obtenu.

### EXEMPLE 3 : Purification des pulpes de betterave

Les pulpes déshydratées sont remises en suspension dans de l'eau déionisée, puis soumises à une hydrolyse acide selon le procédé décrit dans l'Exemple 1. On filtre et on lave à l'eau afin d'éliminer les pectines et hémicelluloses solubilisées. Le résidu solide est ensuite extrait par une solution alcaline selon le procédé décrit dans l'Exemple 1. Ce traitement alcalin est répété une deuxième fois. Le résidu solide est lavé à l'eau jusqu'à obtenir un filtrat neutre, avant d'effectuer deux blanchiments successifs par le chlorite de sodium selon le procédé décrit dans l'Exemple 1. Le dosage chimique indique un pourcentage de 89 % de glucose.

Les Exemples 1, 2 et 3 montrent que plus le nombre d'extractions est important, plus la cellulose du résidu est pure.

### EXEMPLE 4 : Purification des pulpes de betterave

Toute la série de traitements de l'Exemple 1 a été répétée en substituant la solution d'acide sulfurique par une solution d'acide chlorhydrique pour amener le pH de la suspension à pH = 2.

On obtient un pourcentage de 90 % de glucose de résidu cellulosique, similaire à celui obtenu dans l'Exemple 3.

### EXEMPLE 5 : Purification des pulpes de betterave

Les pulpes déshydratées sont remises en suspension dans de l'eau déionisée. Afin d'obtenir une meilleure hydratation, on utilise un mixeur de type WARING BLENDOR équipé d'une hélice à quatre pales, et on mixe de façon intermittente pendant 45 minutes. La suspension est ensuite rendue alcaline par addition d'une solution de soude de concentration appropriée de façon à obtenir une concentration finale en soude de 2 % en poids et un pourcentage de matière sèche de 2,5 % en poids par rapport au liquide total. On y ajoute 0,1 % en poids environ de bisulfite de sodium (Na₂SO₃) par rapport au liquide total. On porte cette suspension à 80°C pendant 2 heures sous agitation mécanique constante. Après ce traitement, on effectue une filtration sur tamis de 0,6 mm. On lave le résidu solide à l'eau jusqu'à obtenir un filtrat neutre. Ce traitement alcalin est répété une deuxième fois. On lave le résidu solide à l'eau jusqu'à obtenir un filtrat neutre, avant d'effectuer deux blanchiments successifs par le chlorite de sodium selon le procédé décrit dans l'Exemple 1.

Le dosage chimique indique un pourcentage de 87 % de glucose.

### EXEMPLE 6 : Purification des pulpes de betterave

On effectue toute la série de traitements de l'Exemple 5, avec trois traitements alcalins successifs avec une solution de soude de concentration appropriée de façon à obtenir une concentration finale en soude de 2 % en poids, au lieu de deux traitements comme dans l'Exemple 5. Le résidu solide est ensuite lavé à l'eau jusqu'à obtenir un filtrat neutre, avant d'effectuer deux blanchiments successifs par le chlorite de sodium selon le procédé décrit dans l'Exemple 1.

Le dosage chimique indique un pourcentage de 92 % de glucose.

### EXEMPLE 7 : Purification des pulpes de betterave

On effectue toute la série de traitements de l'Exemple 5, en remplaçant les deux traitements alcalins à la soude par deux traitements successifs avec une solution de potasse de concentration appropriée de façon à obtenir une concentration finale en potasse de 2 %. Le résidu solide est ensuite lavé à l'eau jusqu'à obtenir un filtrat neutre, avant d'effectuer deux blanchiments successifs par le chlorite de sodium selon le procédé décrit dans l'Exemple 1. On obtient, en utilisant la potasse, des résidus cellulosiques de pureté similaire à celle obtenue avec de la soude.

### EXEMPLE 8 : Influence de la concentration en soude

La pulpe déshydratée a été remise en suspension dans l'eau déionisée par un mixage identique à celui décrit dans l'Exemple 1. La suspension ainsi obtenue est portée à reflux pendant 20 minutes puis filtrée sur tamis de 0,6 mm. Le résidu solide est alors remis en suspension dans une solution de soude de concentration appropriée de façon à obtenir une concentration finale en soude de 2 % ou 8 % en poids et un pourcentage de matière sèche de 2,5 % en poids par rapport au liquide total. Cette suspension est maintenue sous agitation magnétique pendant trois heures à 20°C. Après ce traitement, on effectue une filtration sur tamis de 0,6 mm et un lavage à l'eau jusqu'à obtenir un filtrat neutre.

Après cette extraction, les pourcentages en glucose obtenus pour un traitement avec de la soude à 2 % ou à 8 % sont rapportés dans le Tableau I :

**TABLEAU I**

| Effet de la concentration de soude sur la pureté du résidu cellulosique | | |
|---|---|---|
| Concentration de soude | | % de glucose |
| en poids | molaire | en poids |
| 2 % | 0,5 M | 48 |
| 8 % | 2 M | 58 |

On voit ainsi qu'au cours de la première extraction alcaline, l'utilisation d'une soude plus concentrée se traduit par une cellulose d'une meilleure pureté.

### EXEMPLE 9 : Influence de la concentration en soude

La pulpe déshydratée a été traitée selon l'Exemple 6. Le résidu cellulosique ainsi purifié donne après filtration sous pression réduite à l'aide d'un entonnoir de büchner une pâte à 4 % que l'on traite simultanément et de manière similaire dans huit expériences distinctes. On ajoute à 0,6 gramme de cet échantillon 50 ml d'une solution de soude à 2 %, 7 %, 9 %, 9,5 %, 10 %, 12 %, 14 % et 17 % en poids. Le traitement est effectué à la température T = 20°C sous agitation magnétique constante pendant deux heures. Après neutralisation par l'acide chlorhydrique et dialyse de ces suspensions contre de l'eau distillée, le résidu est séché à l'étuve à 50°C dans de petits récipients, de façon à obtenir des films fins des résidus cellulosiques de chaque expérience.

Dans d'autres essais, une goutte de suspension après dialyse est déposée sur une grille de microscope électronique puis séchée avant d'être observée.

Les études aux rayons X montrent que les films résultant de cellulose traitée par des solutions de soude de 2 à 9 % en poids diffractent de façon identique à la cellulose de départ On les identifie comme étant de la cellulose I (interférences à 0,54 nm, 0,4 nm et 0,258 nm) ayant un taux de cristallinité de l'ordre de 35 %. Par contre, pour les films de cellulose traitée par la soude à des concentrations de 9,5 % et au-dessus, un spectre caractéristique de cellulose Il est obtenu. Il se caractérise en particulier par des interférences à 0,7 nm, 0,44 nm, 0,4 nm et 0,258 nm.

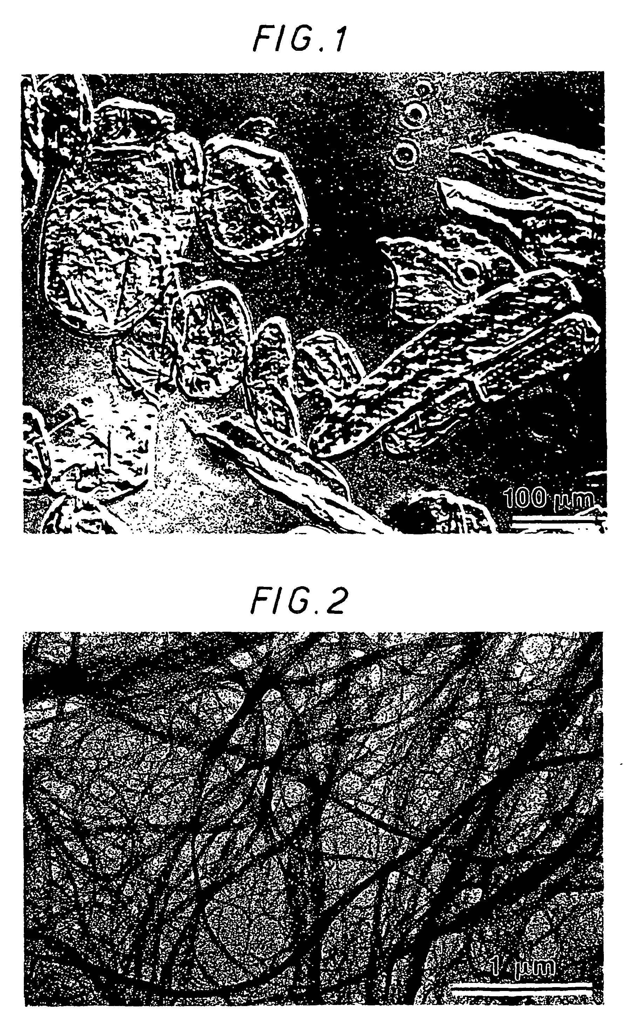

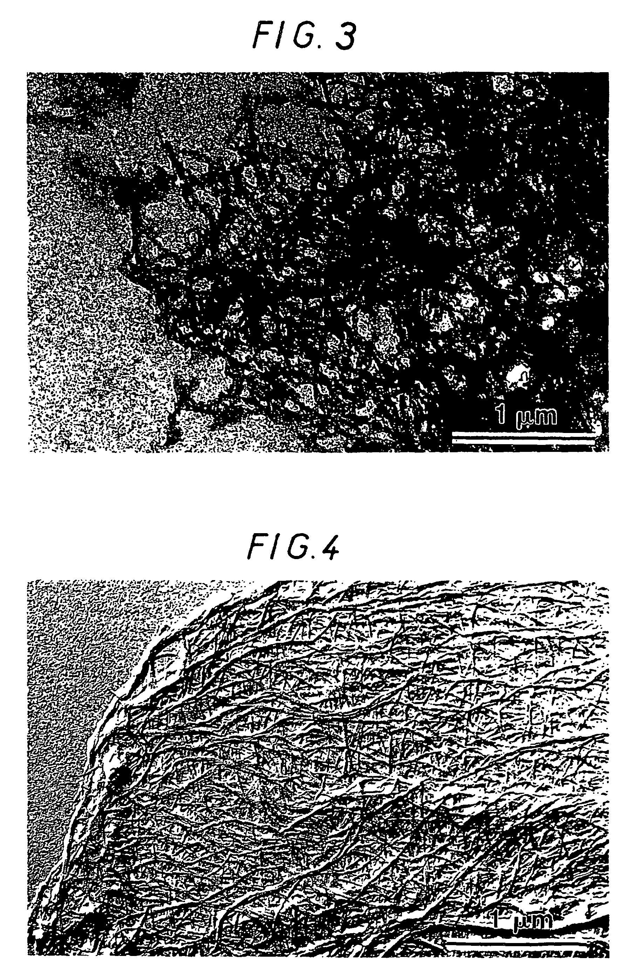

On constate par observation au microscope électronique, que les échantillons qui ont été traités dans la soude de 2 à 9 % se présentent sous forme d'assemblage de microfibrilles de cellulose lisses et enchevêtrées capables de glisser l'une contre l'autre (Figure 2). Par contre, après passage dans la soude à 9,5 % et au-dessus, l'échantillon s'est aggloméré sous forme de grains de microgels constitués d'éléments soudés entre eux (Figure 3). Cette cellulose transformée n'a plus les propriétés caractéristiques de la cellulose de l'invention.

Pour préserver les propriétés particulières de la cellulose de l'invention, il faudra conserver la structure cristalline de la cellulose native ; donc, si l'on utilise une solution de soude lors de l'extraction alcaline, ne jamais dépasser une concentration de 9 %.

### EXEMPLE 10: Elimination de la matière minérale

La pulpe séchée, avant d'être réhydratée, a été passée dans un broyeur à meule équipé d'une grille de 1 mm pendant dix minutes. Un tamisage sur des tamis de 600 et 75 µm, à la sortie du broyeur permet de récupérer une fraction de particules de taille inférieure à 75 µm et une autre fraction très majoritaire entre 75 et 600 µm. Après calcination à 560°C pendant 8 heures, la masse de cendres est rapportée à la masse initiale de l'échantillon introduit. On obtient ainsi les taux de cendres pour chaque fraction : entre 75 et 600 µm, on isole une fraction qui comprend 5 % de matière minérale et en dessous de 75 µm, une fraction avec 12 % de matière minérale.

On constate ainsi que ce broyage suivi d'un tamisage permet d'obtenir une fraction appauvrie en matière minérale.

### EXEMPLE 11 : Elimination de la matière minérale

Les résidus issus des purifications décrites dans les Exemples 1 à 7 ont été mixés dans un WARING BLENDOR à la plus forte vitesse pendant trois minutes après l'étape de blanchiment, puis filtrés sur un tamis de 25 µm. L'efficacité d'un tel traitement est observable au microscope optique car les cristaux d'oxalate de calcium ont la particularité d'être très biréfringents lorsqu'ils sont observés en lumière polarisée. Avant le traitement, on observe de nombreux cristaux entre les cellules sur le fond de la plaque d'observation ainsi que des cristaux à l'intérieur de certaines cellules. A l'issue de ce traitement, il n'y a plus de cristaux observables entre les cellules sur le fond des plaques.

Cet exemple montre que selon l'importance du mixage et l'abondance des lavages sur tamis de porosité appropriée, on arrive à éliminer ces cristaux.

### EXEMPLE 12 : Effet de l'homogénéisation

Les suspensions issues des traitements décrits dans les Exemples 1 à 7 sont des suspensions de cellules purifiées, constituées principalement de cellulose. Une observation au microscope montre que ce sont des cellules plus ou moins individualisées. Ces suspensions sont passées dans un homogénéisateur GAULIN à 40 MPa quinze fois consécutives à une concentration de 2 % après un préchauffage de une heure à 60°C. La température augmente rapidement jusqu'à atteindre 80 à 100°C.

Dans l'homogénéisateur, la suspension purifiée est poussée dans un conduit par un piston à vitesse élevée puis elle passe à travers un orifice de petit diamètre dans lequel la suspension est soumise à une chute de pression importante puis elle est projetée contre un anneau de choc. La conjugaison de ces deux phénomènes, chute de pression et impact de décélaration, produit une action de cisaillement et l'individualisation des microfibrilles de cellulose. En faisant passer plusieurs fois la suspension par l'orifice, on obtient une suspension stable de microfibrilles de cellulose individualisées. Ceci apparaît clairement par observation au microscope optique ou électronique. Sur la photo 4 apparaît nettement la structure d'enchevêtrement de microfibrilles de cellulose constituant la paroi primaire des cellules de parenchyme de la betterave. Sur la photo 5, on peut voir les microfibrilles de cellulose plus ou moins séparées les unes des autres. Cet effet d'individualisation est directement conséquent au traitement d'homogénéisation dans l'homogénéisateur Gaulin.

Les échantillons ainsi traités sont des suspensions de microfibrilles individualisées et ont l'aspect d'un gel.

La cellulose obtenue présente au moins 90 % de parois primaires.

Son pourcentage de cristallinité, observé aux Rayons X, est de 33 %.

L'observation au microscope électronique indique que la section moyenne des microfibrilles est de 2 à 4 nm et que leur longueur est supérieure à 7 µm, et pouvant atteindre une longueur de 15-20 µm.

### EXEMPLE 13 : Effet de l'homogénéisation (temps)

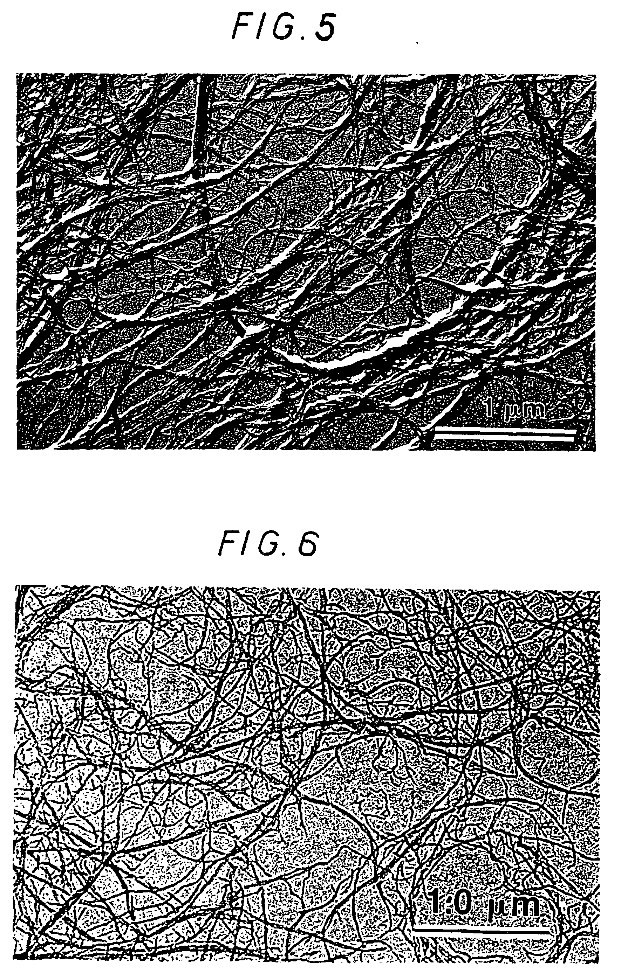

Les pulpes de betterave ont été traitées selon l'Exemple 3 puis mixées dans un WARING BLENDOR trois minutes à grande vitesse, et séparées en trois parties. La première est conservée telle quelle, la seconde est passée à 6 reprises dans l'homogénéisateur GAULIN à 50 MPa, la troisième est soumise à 10 passages à 50 MPa. La Figure 6 montre bien les microfibrilles individualisées après 10 passages dans un homogénéiseur GAULIN.

Ces suspensions sont étudiées à raide d'un rhéomètre CARRI-MED CSL50 avec une géométrie cône-plan. Le seuil d'écoulement correspond à la contrainte minimale à appliquer pour obtenir une valeur de viscosité, valeur directement liée à la force du gel. La suspension obtenue est aussi caractérisée par la valeur de viscosité au gradient de cisaillement de 57,6 s⁻¹. Les résultats obtenus pour les trois suspensions étudiées à une concentration de 1 % sont rassemblés dans le Tableau II.

**TABLEAU II**

| Caractéristiques rhéologiques des suspensions en écoulement | | | |
|---|---|---|---|
| Echantillon | Nombre de passages | σₒ (Pa) | η (MPa.s) à 57,6 s⁻¹ |
| 1 | 0 | 1,4 | 16 |
| 2 | 6 | 4,3 | 186 |
| 3 | 10 | 7,6 | 328 |

Il apparaît clairement que l'effet de l'homogénéisation qui est un effet d'individualisation des microfibrilles de cellulose, provoque une amélioration considérable des caractéristiques rhéologiques. Les caractéristiques des microfibrilles sont similaires à celles de l'Exemple 12, sauf que le pourcentage de parois primaires est de 90 %.

### EXEMPLE 14 : Stabilité des suspensions

Une caractéristique importante des suspensions obtenues selon l'Exemple 12 est la capacité qu'elles ont de constituer des suspensions stables.

De telles suspensions traitées selon l'Exemple 12 ont été conservées pendant plusieurs mois à des concentrations allant de 0,1 % à 7 % sans jamais donner un volume de décantation inférieur à 95 %.

### EXEMPLE 15 : Stabilité des suspensions

Une suspension de microfibrilles de cellulose traitée selon l'Exemple 12 a été traitée par une solution d'acide trifluoroacétique 0,1 M à 20°C pendant 2 heures.

L'analyse des sucres neutres par les acétates d'alditols correspondants donne un pourcentage de cellulose de 95 %. La suspension obtenue n'est pas stable.

L'acide trifluoroacétique a la caractéristique de permettre l'hydrolyse préférentielle des pectines et hémicelluloses. On constate donc une perte de stabilité en corrélation avec l'hydrolyse de pectines et hémicelluloses.

Il apparaît clairement d'après cet exemple que la stabilité de ces suspensions est due à la présence de pectines et hémicelluloses qui se trouvaient liées aux microfibrilles de cellulose.

### EXEMPLE 16 : Remise en suspension

Un échantillon tel que préparé selon l'Exemple 12 est prélevé et séché à l'étuve dans un récipient de polyéthylène à fond plat On obtient au bout de 12 heures à 100°C un film de cellulose sèche. On met ce film (0,2 g) à tremper dans 10 ml d'eau à température ambiante (25°C) et on le triture légèrement avec une baguette de verre. Au bout de 30 minutes on obtient une pâte épaisse. En diluant cette pâte avec de l'eau on obtient une suspension de microfibrilles de cellulose avec des propriétés identiques à la suspension de départ

### EXEMPLE 17 : Remise en suspension

Un échantillon tel que préparé selon l'Exemple 12 est prélevé et séché à l'étuve dans un récipient de polyéthylène à fond plat On obtient au bout de 12 heures à 100°C des films de cellulose sèche. Ces films sont découpés en lambeaux et mis dans un mélangeur WARING BLENDOR avec de l'eau déionisée. Après 15 minutes d'agitation, ces lambeaux sont désintégrés et une suspension de microfibrilles est obtenue avec des propriétés analogues à la suspension de départ

### EXEMPLE 18 (Comparatif) : Remise en suspension

Des échantillons tels que préparés selon l'Exemple 12 sont prélevés et mis à sécher à l'étuve à 60°C pendant 12 heures. On obtient des films de cellulose que l'on traite à l'acide trifluoroacétique, comme dans l'Exemple 15. On remet les films ainsi traités en suspension dans l'eau.

Ces échantillons sont difficiles à disperser et on ne retrouve pas les propriétés initiales de la cellulose.

Cet Exemple démontre qu'une cellulose non chargée sortant du cadre de la présente invention, ne peut pratiquement être remise en suspension après déshydratation, sans perte importante de ses propriétés rhéologiques.

### EXEMPLE 19 : Réactivité

La cellulose de l'invention, préparée selon l'Exemple 12 a été incubée avec un mélange enzymatique de Trichoderma reesei CL-847. Dans un erlenmeyer de 25 ml, on remet en suspension dans 30 ml d'eau distillée, 810 mg de cellulose de l'invention. On agite de façon à obtenir une suspension homogène de microfibrilles de cellulose et on met à équilibrer en température 15 mn à 50°C. La solution enzymatique est préparée en dissolvant 31,10 mg d'enzyme (correspondant à 25 FPU/g de cellulose) dans 15 ml de tampon citrate de sodium à pH = 4,8. La solution est ajoutée au milieu réactionnel qu'on laisse à incubation à 50°C sous agitation horizontale de 50 aller-retours par minute. Après 4 h, 8 h et 24 h de réaction, on prélève 3 ml de milieu réactionnel bien homogène (de façon à ne pas modifier la concentration) que l'on porte dans un cône eppendorf à reflux à 100°C pendant 20 minutes pour dénaturer les enzymes et par conséquent stopper les réactions enzymatiques. On centrifuge pendant 10 minutes à 10 000 g puis on filtre sur membrane cellulosique micropore de porosité de 0,45 µm. Le dosage est réalisé par CLHP en utilisant les standards de glucose et de cellobiose. On constate que la cellulose de l'invention est rapidement hydrolysée par le mélange enzymatique pour donner 0,45 mg de sucres réducteurs (glucose et cellobiose) par mg de cellulose de départ après 4 heures d'hydrolyse, 0,58 mg par mg de cellulose de départ après 8 heures d'hydrolyse et 0,85 mg par mg de cellulose de départ après 24 heures d'hydrolyse.

### EXEMPLE 20 : Optimisation du procédé d'obtention de cellulose microfibrillée à partir de pulpe de betterave sur pilote industriel

De la pulpe de betterave déshydratée est mise en suspension dans une solution de soude dont la concentration est comprise entre 1,5 et 2 % en poids par rapport au liquide total.

La quantité d'eau nécessaire est telle que le ratio liquide/solide en poids est d'environ 15 (1 kg de pulpe dans 15 kg d'eau).

Cette remise en suspension s'effectue en cuve agitée. L'ensemble est chauffé à 80°C pendant 2 heures.

La fraction solide de la suspension est ensuite séparée de la fraction liquide par passage dans une essoreuse centrifuge contenant une poche de maille inférieure à 250 µm. Au cours de la centrifugation, le gâteau est rincé.

Le gâteau récupéré est remis en suspension dans une nouvelle solution de soude à 1,5 % de concentration dans un ratio liquide/solide (en MS) identique au précédent.

De même, l'ensemble est porté, sous agitation, à 80°C pendant 2 heures.

On effectue un nouvel essorage avec, cette fois, une toile plus fine (25-100 µm) et le gâteau est rincé à l'eau.

Le gâteau de cellulose est ensuite mis en suspension dans une solution à 3,5 g/l de chlorite de sodium dont le pH a été ajusté à 4-5 avec de l'HCl 33 %. Le ratio liquide/solide (en MS) de cette suspension est toujours d'environ 15.

La cellulose blanchie est ensuite récupérée par centrifugation avec une toile de maille 10-30 µm.

Le gâteau est rincé et centrifugé jusqu'à obtention d'un filtrat dair.

La cellulose obtenue est ensuite rediluée dans l'eau de façon à l'amener à un taux de matières sèches compris entre 3 et 4 %, puis la suspension est passée dans un broyeur à meule FRYMA. Cette étape de broyage permet d'éclater les parois cellulaires et de "pré-homogénéiser" le produit.

La cellulose broyée est ensuite homogénéisée dans un homogénéisateur APV GAULIN à une pression comprise entre 450 et 550 bars. Le produit est préchauffé à une température supérieure à 95°C de telle façon que le produit soit à ébullition au moment de passer à travers l'orifice. Ceci a pour but de créer un phénomène de cavitation.

Le produit subit entre 3 et 10 passes en fonction du degré d'homogénéisation voulu.

La cellulose est ensuite concentrée à un taux de matières sèches supérieur à 35 % par passage dans un filtre presse type LAROX ou CHOQUENET.

### EXEMPLE 21 : Viscosité comparée des suspensions avant et après séchage

On a préparé de la cellulose comme dans l'Exemple 20.

On a préparé des échantillons N° 1 et N° 2 de la façon suivante. On a pressé de la cellulose jusqu'à 40% de matière sèche puis on l'a séchée jusqu'à 60% (échantillon N° 1) et jusqu'à 85% (échantillon N° 2).

Les deux échantillons ont été ensuite séchés dans une enceinte climatique à 20°C et à 50% d'humidité relative puis ils ont été broyés pendant 30 secondes dans un moulin à café avant d'être remis en suspension à 2% de matière sèche par l'ULTRA TURRAX pendant 2 minutes.

Le témoin est de la cellulose à 2% de matière sèche homogénéisée à l'ULTRA TURRAX pendant 2 minutes.

On a mesuré les viscosités des échantillons N° 1 et N° 2 ainsi que du témoin après 4 heures de repos (caractère thixotropique de la cellulose) par un viscosimètre HAAKE VT 500, dispositif de mesure MV_{II}, avec un gradient de cisaillement de 1,8 s⁻¹.

On a obtenu les résultats suivants :

| | |
|---|---|
| Viscosité du témoin | 25 Pa.s |
| Viscosité de l'échantillon N° 1 | 25 Pa.s |
| Viscosité de l'échantillon N° 2 | 22 Pa.s |

La cellulose de l'invention séchée à 60% de matière sèche récupère donc 100% de sa viscosité et séchée à 85% de matière sèche, elle récupère 90% de sa viscosité.

La cellulose de la présente invention se distingue ici encore de la cellulose du brevet ITT INDUSTRIES EP 120 471 qui sans additif ne récupère au maximum que 2 à 20% de sa viscosité initiale et qui nécessite un ajout d'au moins 100% en poids d'additif par rapport à la cellulose pour récupérer la quasi totalité de sa viscosité initiale.

### EXEMPLE 22 :Extraction de cellulose de pulpe de pomme de terre (après extraction de l'amidon)

### Purification de pulpes de pommes de terre

Les pulpes de pommes de terre, dont on a extrait l'amidon, ont été remises en suspension dans de l'eau déionisée. Afin d'obtenir une meilleure hydratation, on a utilisé un mixeur du type WARING BLENDOR équipé d'une hélice à quatre pales, et on a mixé de façon intermittente pendant 45 minutes. La suspension a été ensuite rendue alcaline par addition d'une solution de soude de concentration telle que l'on obtienne une concentration finale en soude de 2 % en poids et un pourcentage de matière sèche de 2,5 % en poids par rapport au liquide total. Cette suspension a été ensuite portée à 80°C pendant 2 heures sous agitation mécanique constante. Après ce traitement, une filtration a été effectuée sur tamis de 0,6 mm. Le résidu a été lavé à l'eau jusqu'à obtention d'un filtrat neutre. Ce traitement alcalin a été répété une deuxième fois. Le résidu solide a été lavé à l'eau jusqu'à obtention d'un filtrat neutre.

Après ce lavage, le résidu solide a été remis en suspension à 2,5 % dans une solution de chlorite de sodium (NaClO₂) à 3,4 g/l, tamponnée par un mélange de soude et d'acide acétique à un pH de 4,9. Cette solution a été portée à 70°C pendant 3 heures sous agitation mécanique constante. Par la suite, la suspension a été filtrée sur un tamis en acier inoxydable puis rincée à l'eau jusqu'à obtention d'un filtrat incolore. Un résidu cellulosique, de 3 à 5 % en poids sec est obtenu par filtration sous pression réduite à l'aide d'un entonnoir BÜCHNER.

Le dosage chimique du résidu cellulosique obtenu indique un pourcentage de 93 % de glucose. Le degré de polymérisation viscosimétriques moyen est de l'ordre de 1000.

### Homogénéisation

L'homogénéisation a été effectuée de la même manière que dans l'Exemple 12.

### Stabilité des suspensions

Les suspensions de microfibrilles, issues de pulpe de pomme de terre, obtenues selon le protocole ci-dessus constituent des suspensions stables.

### Viscosité des suspensions

Pour une suspension à 0,3 % de matière sèche
Brookfield : 250 mPa
30 t/mn Aiguille n°2

### EXEMPLE 23 : Extraction de cellulose de carotte

1 Kg de carottes à 10 % de MS (soit 100 g de matières sèches) ont été râpées. Les râpures de carottes ont été mises en suspension dans une solution de soude afin d'obtenir un mélange de 100 g de matières sèches dans 2 litres de solution à 2 % de soude.

La suspension a été portée à 90°C pendant 2 heures sous agitation mécanique. Après ce traitement, on a effectué une séparation liquide/solide par centrifugation. Le résidu solide a été rincé. Il a été ensuite remis en suspension dans une solution de soude à 1,5 % avec un ratio liquide/solide de 15.

Le mélange a été de nouveau centrifugé et le résidu solide a été récupéré et rincé. Après homogénéisation, de la même façon que dans l'Exemple 12, on a obtenu une suspension stable dans l'eau et ayant l'aspect d'un gel.

Bien que le procédé de la présente invention ait été décrit et illustré en référence à la pulpe de betterave, de pomme de terre et de carotte, il peut également être appliqué au traitement de n'importe quel parenchyme, par exemple tous les citrus (citrons, pamplemousses, oranges), ainsi que la plupart des fruits et légumes.

## Revendications

1. Cellulose microfibrillée de type I provenant de parenchyme, comprenant des restes de polysaccharides acides non cellulosiques en provenance du parenchyme.

2. Cellulose selon la revendication 1, **caractérisé en ce que** les polysaccharides acides non cellulosiques sont choisis parmi les pectines et les hemicelluloses.

3. Cellulose selon l'une des revendications 1 et 2, **caractérisée en ce que** le pourcentage en poids des restes de polysaccharides acides non cellulosiques est inférieur à 30%.

4. Cellulose selon la revendication 3, **caractérisée en ce que** le pourcentage en poids des restes de polysaccharides acides non cellulosiques est inférieur à 5%.

5. Cellulose microfibrillée selon l'une quelconque des revendications 1 à 4, **caractérisée en ce qu'**elle a une cristallinité de 15 à 50%.

6. Cellulose microfibrillée selon l'une quelconque des revendications 1 à 5, **caractérisée en ce qu'**elle comprend des microfibrilles ayant une section comprise entre environ 2 et environ 4 nm.

7. Procédé de préparation de la cellulose microfibrillée de la revendication 1, à partir de pulpe de parenchyme principalement à parois primaires, notamment de pulpe de betterave sucrière après extraction du saccharose, contenant de la cellulose, des pectines, des hémicelluloses, des protéines et des matières minérales, comprenant les étapes de :
(a) hydrolyse acide ou basique de la pulpe pour effectuer une extraction partielle des pectines et des hémicelluloses à une température composée entre environ 60° C et environ 100° C ;
(b) récupération du résidu solide de la suspension provenant de l'étape (a);
(c) deuxième extraction, effectuée dans des conditions alcalines, du résidu de matériau cellulosique provenant de l'étape (b), obligatoirement si l'étape (a) est acide, facultativement si l'étape (a) est basique ;
(d) le cas échéant, récupération du résidu de matériau cellulosique par séparation de la suspension provenant de l'étape (c) ;
(e) lavage du résidu provenant de l'étape (b) ou, le cas échéant, de l'étape (d) ;
(f) facultativement, blanchiment du matériau cellulosique provenant de l'étape (e) ;
(g) récupération du matériau cellulosique par séparation de la suspension provenant de l'étape (f) ;
(h) dilution dans l'eau du matériau cellulosique provenant de l'étape (g) pour obtenir entre 2 et 10% de matière sèche ;
(i) homogénéisation de la suspension de cellules provenant de l'étape (h) par mixage ou broyage ou toute opération de cisaillement mécanique élevé, suivi de passage de la suspension de cellules à travers un orifice de petit diamètre, soumettant la suspension à une chute de pression d'au moins 20 Mpa et à une action de cisaillement à vitesse élevée suivie d'un impact de décélération à vitesse élevée,
procédé dans lequel toute étape d'extraction alcaline est effectuée avec une base dont la concentration est inférieure à environ 9% en poids.

8. Procédé selon la revendication 7, **caractérisé en ce que** l'étape (a) est effectuée à une température comprise entre environ 70 et 95°C.

9. Procédé selon la revendication 8, **caractérisé en ce que** l'étape (a) est effectuée à une température égale à environ 90°C.

10. Procédé selon l'une quelconque des revendications 7 à 9, **caractérisé en ce que** toute étape d'extraction alcaline est effectuée avec une base choisie parmi la soude et la potasse.

11. Procédé selon l'une quelconque des revendications 7 à 10, **caractérisé en ce que** la concentration de la base utilisée pour toute étape d'extraction alcaline est dans l'intervalle d'environ 1 % à environ 6 % en poids.

12. Procédé selon l'une quelconque des revendications 7 et 11, **caractérisé par le fait que** l'on ajoute à la suspension à homogénéiser dans l'étape (i) un additif choisi dans le groupe composé des agents dispersants, des suspensoïdes et des agents épaississants solubles dans l'eau.

13. Procédé selon l'une quelconque des revendications 7 et 12, **caractérisé par le fait que** l'étape d'homogénéisation (i) est effectuée à une température comprise entre 95 et 120°C, de préférence supérieure à 100°C.

14. Procédé selon l'une quelconque des revendications 7 et 13, **caractérisé par le fait que** l'on effectue avant l'étape (a) un broyage et un tamisage de la pulpe déshydratée pour conserver la fraction ayant une granulométrie comprise entre environ 20 µm et environ 1000 µm, de préférence entre environ 75 µm et 600 µm.

15. Procédé selon l'une quelconque des revendications 7 à 14, **caractérisé par le fait que** l'on effectue un traitement de blanchiment dans l'étape (f) et que l'on y associe un traitement oxydant à l'ozone ou au peroxyde d'hydrogène.

16. Procédé selon l'une quelconque des revendications 7 à 14, **caractérisé par le fait que** l'on effectue un traitement de blanchiment dans l'étape (f) et que ce traitement est effectué au moyen d'ozone ou de peroxyde d'hydrogène.

17. Procédé selon l'une quelconque des revendications 7 à 16, **caractérisé par le fait que** l'on effectue après l'étape de lavage (e) ou, le cas échéant, après l'étape de blanchiment (f), un broyage modéré à l'état humide de la suspension cellulosique suivi d'un filtrage avec une ouverture de tamis comprise entre environ 20 et environ 75 µm.

18. Procédé selon l'une quelconque des revendications 7 à 17, **caractérisé par le fait que** la cellulose issue de l'étape d'homogénéisation (i) est soumise à concentration.

19. Procédé selon la revendication 18, **caractérisé par le fait que** la concentration est effectuée à un taux supérieur à environ 50 % de matières sèches.

20. Procédé selon la revendication 18 ou la revendication 19, **caractérisé par le fait que** la concentration est effectuée par pressage, filtration ou séchage basse température et humidité contrôlée.

21. Procédé selon l'une quelconque des revendications 7 à 20, **caractérisé en ce que** l'homogénéisation de l'étape (i) est suivie d'une opération de cisaillement élevé.

## Claims

1. Type 1 microfibrillated cellulose of parenchymal origin, comprising residual non-cellulosic acid polysaccharides of parenchymal origin.

2. Cellulose according to claim 1, **characterised in that** the non-cellulosic acid polysaccharides are selected from among the pectins and the hemicelluloses.

3. Cellulose according to one of claims 1 and 2, **characterised in that** the percentage by weight of the residual non-cellulosic acid polysaccharides is less than 30%.

4. Cellulose according to claim 3, **characterised in that** the percentage by weight of the residual non-cellulosic acid polysaccharides is less than 5%.

5. Microfibrillated cellulose according to one of claims 1 to 4, **characterised in that** it has a crystallinity of 15 to 50%.

6. Microfibrillated cellulose according to any one of claims 1 to 5, **characterised in that** it comprises microfibrils having a cross section of between about 2 and about 4 nm.

7. Process for preparing the microfibrillated cellulose according to claim 1, from pulp of parenchyma containing mainly primary walls, notably sugar beet pulp after extraction of the sucrose, containing cellulose, pectins, hemicelluloses, proteins and mineral substances, comprising the steps of:
(a) acid or basic hydrolysis of the pulp to effect partial extraction of the pectins and hemicelluloses at a temperature of between about 60°C and about 100°C;
(b) recovery of the solid residue from the suspension from step (a) ;
(c) second extraction, carried out under alkaline conditions, of the residue of cellulose material from step (b), this extraction being obligatory if step (a) is acid and optional if step (a) is basic;
(d) if necessary, recovery of the residue of cellulose material by separation of the suspension from step (c);
(e) washing the residue from step (b) or, if applicable, step (d);
(f) optionally bleaching the cellulose material from step (e) ;
(g) recovery of the cellulose material by separation of the suspension from step (f);
(h) dilution of the cellulose material from step (g) in water to obtain between 2 and 10% of dry matter;
(i) homogenisation of the cell suspension from step (h) by mixing or grinding or any operation of high mechanical shear, followed by passing the cell suspension through a small-diameter opening, subjecting the suspension to a pressure drop of at least 20 MPa and to a high speed shearing action followed by a high speed deceleration impact,
in which process any alkaline extraction step is carried out with a base the concentration of which is less than about 9% by weight.

8. Process according to claim 7, **characterised in that** step (a) is carried out at a temperature of between about 70 and 95°C.

9. Process according to claim 8, **characterised in that** step (a) is carried out at a temperature equal to about 90°C.

10. Process according to any one of claims 7 to 9,
**characterised in that** any alkaline extraction step is carried out with a base selected from sodium hydroxide and potassium hydroxide.

11. Process according to any one of claims 7 to 10, **characterised in that** the concentration of the base used for any alkaline extraction step is within the range from about 1% to about 6% by weight.

12. Process according to any one of claims 7 and 11, **characterised in that** an additive selected from among the dispersing agents, suspensoids and water-soluble thickening agents is added to the suspension to be homogenised in step (i).

13. Process according to any one of claims 7 and 12, **characterised in that** the homogenisation step (i) is carried out at a temperature between 95 and 120°C, preferably above 100°C.

14. Process according to any one of claims 7 and 13, **characterised in that** before step (a) the dehydrated pulp is ground and sieved to retain the fraction having a particle size of between about 20 µm and about 1000 µm, preferably between about 75 µm and 600 µm.

15. Process according to any one of claims 7 to 14, **characterised in that** a bleaching treatment is carried out in step (f) and that it is combined with an oxidising treatment using ozone or hydrogen peroxide.

16. Process according to any one of claims 7 to 14, **characterised in that** a bleaching treatment is carried out in step (f) and that this treatment is effected using ozone or hydrogen peroxide.

17. Process according to any one of claims 7 to 16, **characterised in that** after the washing step (e) or, if applicable, the bleaching step (f), the cellulose suspension is subjected to moderate grinding while wet followed by filtering through a sieve with a mesh size of between about 20 and about 75 µm.

18. Process according to any one of claims 7 to 17, **characterised in that** the cellulose from the homogenisation step (i) is subjected to concentration.

19. Process according to claim 18, **characterised in that** the concentration is carried out to obtain a content of dry matter greater than about 50%.

20. Process according to claim 18 or claim 19, **characterised in that** the concentration is carried out by pressing, filtration or drying at low temperature and at a controlled humidity.

21. Process according to any one of claims 7 to 20, **characterised in that** the homogenisation of step (i) is followed by a high shear operation.

## Patentansprüche

1. Mikrofibrillen-Cellulose vom Typ I, welche aus Parenchym stammt und Reste von nicht-cellulosischen, aus Parenchym stammenden sauren Polysacchariden aufweist.

2. Cellulose nach Anspruch 1, **dadurch gekennzeichnet, daß** die nicht-cellulosischen sauren Polysaccharide unter den Pektinen und den Hemicellulosen ausgewählt sind.

3. Cellulose nach einem der Ansprüche 1 und 2, **dadurch gekennzeichnet, daß** der Gewichtsprozentanteil der Reste von nicht-cellulosischen sauren Polysacchariden weniger als 30% beträgt.

4. Cellulose nach Anspruch 3, **dadurch gekennzeichnet, daß** der Gewichtsprozentanteil der Reste von nicht-cellulosischen sauren Polysacchariden weniger als 5% beträgt.

5. Mikrofibrillen-Cellulose nach einem der Ansprüche 1 bis 4, **dadurch gekennzeichnet, daß** sie eine Kristallinität von 15 bis 50% aufweist.

6. Mikrofibrillen-Cellulose nach einem der Ansprüche 1 bis 5, **dadurch gekennzeichnet, daß** sie Mikrofibrillen mit einem Querschnitt von zwischen ca. 2 und ca. 4 nm aufweist.

7. Verfahren zur Herstellung der Mikrofibrillen-Cellulose nach Anspruch 1 ausgehend von Parenchympulpe mit hauptsächlich Primärwänden, insbesondere Pulpe von Zuckerrüben nach Extraktion von Saccharose, welche Cellulose, Pektine, Hemicellulosen, Proteine und Mineralstoffe enthält, wobei das Verfahren die Schritte aufweist:
(a) saure oder basische Hydrolyse der Pulpe zum Bewirken einer teilweisen Extraktion der Pektine und der Hemicellulosen bei einem Temperaturunterschied zwischen ca. 60°C und ca. 100°C;
(b) Rückgewinnung des festen Rückstandes der aus Schritt (a) stammenden Suspension;
(c) zweite, unter alkalischen Bedingungen durchgeführte Extraktion des aus Schritt (b) stammenden Rückstandes von Cellulosematerial, die zwingend ist, wenn Schritt (a) sauer ist, und fakultativ, wenn Schritt (a) basisch ist;
(d) gegebenenfalls Rückgewinnung des Rückstandes von Cellulosematerial durch Trennen der aus Schritt (c) stammenden Suspension;
(e) Waschen des aus Schritt (c) und gegebenenfalls aus Schritt (d) stammenden Rückstandes;
(f) fakultativ, Bleichen des aus Schritt (e) stammenden Cellulosematerials;
(g) Rückgewinnung des Cellulosematerials durch Trennen der aus Schritt (f) stammenden Suspension;
(h) Verdünnen des aus Schritt (g) stammenden Cellulosematerials für den Erhalt von zwischen 2 und 10% Trockenmasse;
(i) Homogenisieren der aus Schritt (h) stammenden Zellsuspension durch Rühren oder Mahlen oder jeglichen Arbeitsschritt der Feinzerkleinerung, gefolgt von Hindurchleiten der Zellsuspension durch eine Öffnung mit kleinem Durchmesser, wobei die Suspension einem Druckabfall von mindestens 20 Mpa und einer Zerkleinerungs- bzw. Scherwirkung mit erhöhter Geschwindigkeit ausgesetzt wird, gefolgt von einem verlangsamenden Aufprall mit erhöhter Geschwindigkeit, wobei in dem Verfahren jeder alkalische Extraktionsschritt mit einer Base durchgeführt wird, deren Konzentration geringer als ca. 9 Gew.-% ist.

8. Verfahren nach Anspruch 7, **dadurch gekennzeichnet, daß** Schritt (a) bei einer zwischen ca. 70 und 95°C liegenden Temperatur durchgeführt wird.

9. Verfahren nach Anspruch 8, **dadurch gekennzeichnet, daß** Schritt (a) bei einer Temperatur von gleich ca. 90°C durchgeführt wird.

10. Verfahren nach einem der Ansprüche 7 bis 9, **dadurch gekennzeichnet, daß** jeder alkalische Extraktionsschritt mit einer Base durchgeführt wird, die aus Soda und Kalium ausgewählt ist.

11. Verfahren nach einem der Ansprüche 7 bis 10, **dadurch gekennzeichnet, daß** die Konzentration der verwendeten Base bei jedem alkalischen Extraktionsschritt in einem Bereich von ca. 1 bis ca. 6 Gew.-% liegt.

12. Verfahren nach einem der Ansprüche 7 und 11, **dadurch gekennzeichnet, daß** der zu homogenisierenden Suspension in Schritt (i) ein Zusatzstoff zugegegeben wird, der aus der Gruppe bestehend aus wasserlöslichen Dispersions-, Suspensions- und Dickungsmitteln ausgewählt ist.

13. Verfahren nach einem der Ansprüche 7 und 12, **dadurch gekennzeichnet, daß** der Homogenisierschritt (i) bei einer zwischen 95 und 120°C, vorzugsweise über 100°C liegenden Temperatur durchgeführt wird.

14. Verfahren nach einem der Ansprüche 7 und 13, **dadurch gekennzeichnet, daß** vor Schritt (a) ein Mahlen und ein Sieben der entwässerten Pulpe durchgeführt wird, um die Fraktion mit einer Granulometrie von zwischen ca. 20 *m und ca. 1000 *m, vorzugsweise zwischen 75 *m und 600 *m zu bewahren.

15. Verfahren nach einem der Ansprüche 7 bis 14, **dadurch gekennzeichnet, daß** in Schritt (f) eine Bleichbehandlung durchgeführt wird, und daß eine oxydierende Behandlung mit Ozon oder Wasserstoffperoxid damit verbunden wird.

16. Verfahren nach einem der Ansprüche 7 bis 14, **dadurch gekennzeichnet, daß** in Schritt (f) eine Bleichbehandlung durchgeführt wird, und daß diese Behandlung mittels Ozon oder Wasserstoffperoxid durchgeführt wird.

17. Verfahren nach einem der Ansprüche 7 bis 16, **dadurch gekennzeichnet, daß** nach dem Waschschritt (e) oder gegebenenfalls nach dem Bleichschritt (f) ein gemäßigtes Mahlen der Cellulosesuspension im feuchten Zustand durchgeführt wird, gefolgt von einer Filtrierung mit einer Sieböffnung von zwischen ca. 20 und ca. 75 *m.

18. Verfahren nach einem der Ansprüche 7 bis 17, **dadurch gekennzeichnet, daß** die aus dem Homogenisierungsschritt (i) hervorgegangene Cellulose einer Einengung unterzogen wird.

19. Verfahren nach Anspruch 18, **dadurch gekennzeichnet, daß** die Einengung bis zu einem Trockenmasseanteil von mehr als ca. 50% durchgeführt wird.

20. Verfahren nach Anspruch 18 oder Anspruch 19, **dadurch gekennzeichnet, daß** die Einengung mittels Pressen, Filtrieren oder Trocknen bei niedriger Temperatur und kontrollierter Feuchtigkeit durchgeführt wird.

21. Verfahren nach einem der Ansprüche 7 bis 20, **dadurch gekennzeichnet, daß** das Homogenisieren von Schritt (i) von einem Arbeitsschritt des Feinzerkleinerns gefolgt ist.
